(19) Europäisches Patentamt
European Patent Office
Office européen des brevets

(11) **EP 2 890 929 B1**

(12) **EUROPEAN PATENT SPECIFICATION**

(45) Date of publication and mention
of the grant of the patent:
**20.12.2017 Bulletin 2017/51**

(51) Int Cl.:
*F21Y 115/10* *(2016.01)*      *G02B 6/10* *(2006.01)*
*F21V 29/70* *(2015.01)*      *F21V 8/00* *(2006.01)*

(21) Application number: **13786753.7**

(22) Date of filing: **16.08.2013**

(86) International application number:
**PCT/IB2013/056678**

(87) International publication number:
**WO 2014/033585 (06.03.2014 Gazette 2014/10)**

(54) **ILLUMINATION DEVICE BASED ON THERMALLY CONDUCTIVE SHEET WITH LIGHT DIFFUSING PARTICLES**

BELEUCHTUNGSVORRICHTUNG AUF DER BASIS EINER THERMISCH LEITENDEN FOLIE MIT LICHTSTREUENDEN TEILCHEN

DISPOSITIF D'ÉCLAIRAGE REPOSANT SUR UNE FEUILLE THERMIQUEMENT CONDUCTRICE COMPRENANT DES PARTICULES DIFFUSANT LA LUMIÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.08.2012 US 201261695788 P**

(43) Date of publication of application:
**08.07.2015 Bulletin 2015/28**

(73) Proprietor: **Philips Lighting Holding B.V.**
**5656 AE Eindhoven (NL)**

(72) Inventors:
• **VAN HERPEN, Maarten Marinus Johannes Wilhelmus**
**NL-5656 AE Eindhoven (NL)**

• **DEKKER, Tim**
**NL-5656 AE Eindhoven (NL)**

(74) Representative: **Verweij, Petronella Daniëlle et al**
**Philips Lighting B.V.**
**Philips Lighting Intellectual Property**
**High Tech Campus 45**
**5656 AE Eindhoven (NL)**

(56) References cited:
DE-A1-102009 001 170      JP-A- 2010 073 476
US-A1- 2010 066 937      US-A1- 2010 247 901
US-A1- 2011 121 703      US-A1- 2011 141 400
US-A1- 2012 099 204      US-A1- 2012 127 749
US-B1- 8 033 706

## Description

### FIELD OF THE INVENTION

The present invention relates to an illumination device comprising a light guide unit with embedded light scattering and/or reflecting particles and at least one light emitting element.

### BACKGROUND OF THE INVENTION

Illumination devices comprising a light source coupled with a light guide sheet or plate, which is able to propagate light internally, redirect and out-couple the light from its surface, provide for illuminating surfaces such as shelves, interior panels, signs and posters. An illumination device with a light guide and a light emitting element is known from US2011/0121703 A1. One light guide for use in such an illumination device is the ACRYLITE® EndLighten sheet from Evonik Industries. It comprises a sheet of a light conducting acrylic material in which light diffusing particles are embedded. The acrylic sheet accepts light from a light source through its end surfaces, from which the light propagates within the sheet by means of internal reflection. The light diffusing particles embedded in the sheet redirect the travelling light such that at least some of it may exit the surface of the sheet, thereby giving the sheet its illuminating properties.

When making an illumination device based on an acrylic sheet with embedded light diffusing particles, such as the EndLighten material, a high power light source may be needed, which requires cooling. For example, in the case of a LED (light emitting diode) light source, cooling can be done by conducting away the heat from the LEDs with a relatively large metal heat-sink. However, for a minimalistic design, use of a relatively large metal heat-sink may be undesired.

### SUMMARY OF THE INVENTION

In view of the above discussion, a concern of the present invention is to provide an illumination device where heat originating from at least one light emitting element may be dissipated while keeping the overall size of the illumination device relatively small, or with a relatively small impact or even no impact on a minimalistic design of the illumination device.

To address at least one of this concern and other concerns, an illumination device in accordance with the independent claim is provided. Preferred embodiments are defined by the dependent claims.

According to an aspect of the invention, there is provided an illumination device comprising:

- a light guide unit comprising embedded light scattering and/or reflecting particles and at least one light in-coupling surface adapted to couple light into the light guide unit; and

- at least one light emitting element arranged such that at least some light emitted from it is coupled into the light guide unit via said light in-coupling surface;

wherein at least a portion of an outer surface of the light guide unit comprises a layer having a mesh of a plurality of wires comprising a thermally conductive material to transfer heat generated by operation of the at least one light emitting element away from the at least one light emitting element, wherein the layer is arranged such that the portion of the body of the light guide unit has an absolute thermal resistance equal to or less than 20 K/W. Hereinafter, the layer of a thermally conductive material that is comprised in at least a portion of an outer surface of the light guide is also referred to as "heat transferring means".

The term "absolute thermal resistance", as referred herein, denotes the temperature difference across a structure when a unit of heat energy flows through it in unit time. Thermal resistance as referred to herein is the reciprocal of thermal conductivity.

The layer of thermally conductive material and the at least one light emitting element are coupled with each other via a thermally conductive connector.

In an embodiment, the heat transferring means is arranged such that the at least a portion of the body of the light guide unit has an absolute thermal resistance equal to or less than 17 K/W. In another example, the heat transferring means is arranged such that the at least a portion of the body of the light guide unit has an absolute thermal resistance equal to or less than 15 K/W. The absolute thermal resistance may depend on the geometry of the light guide unit and/or the material or materials of the light guide unit. In one example, the portion of the body of the light guide unit is equal to or exceeds 50 % of the body. In another example, the portion of the body of the light guide unit is equal to or exceeds 75 % of the body. In yet another example, the portion of the body of the light guide unit is equal to or exceeds 90 % of the body.

The illumination device according to the present invention comprises a light guide unit with embedded light scattering and/or reflecting particles and at least one light emitting element. The light guide unit comprises a light guide, such as a wave guide, and heat transferring means.

In one example, the light guide unit is preferably transparent. The term "transparency", as referred to herein, is the physical property of allowing light to pass through the material without being scattered. In another example, at least the light guide is transparent.

For example, the material of the light guide, in which material light scattering and/or reflecting particles are embedded, is preferably transparent. In an embodiment, the light guide unit comprises a material selected from poly(methylmethacrylate) (PMMA), polycarbonate, glass and/or silicon rubber. PMMA is sometimes called acrylic glass. A light guide unit may comprise more than one of these materials. For example, the light guide may comprise PMMA, polycarbonate, glass and/or silicon rubber.

The light guide unit may have various forms, such as a plate, a rod or a fiber. The shapes of the light guide unit may be substantially regular or irregular. At least a portion of the outer surface of the light guide unit may be smooth. In another example, at least a portion of the outer surface of the light guide unit is rough, i.e. not smooth. The light guide unit may have a rectangular, triangular or circular shape.

The light guide unit comprises light scattering and/or reflecting particles embedded into the material. In one example, the light scattering and/or reflecting particles are embedded into the material of the light guide. Typically, the light scattering and/or reflecting particles may have a size in the range of 0.7 micrometer to 100 micrometer, such as in the range of 1 micrometer to 10 micrometer. Preferably, the light scattering and/or reflecting particles are transparent and/or colorless. The light scattering and/or reflecting particles may be selected from the group consisting of polystyrene particles, polycarbonate particles, polypropylene particles, poly(methylmethacrylate) particles, glass beads, silicon dioxide particles, quartz particles, and any combination thereof. The material of the light scattering and/or reflecting particles may be the same or different as the material of the light guide unit.

The at least one light emitting element generates heat and emits light during use. The light guide unit accepts light from at least one light emitting element through at least one light in-coupling surface, from which the light propagates within the light guide unit by means of total internal reflection. The at least one light-in coupling surface is preferably smooth for enhanced light entry and low light out-coupling due to roughness on the surface. The light scattering and/or reflecting particles embedded in the light guide unit redirect the light propagating within the light guide unit such that at least some of it may exit a surface, e.g. light out-coupling surface, of the light guide unit, thereby giving the light guide unit at least some of its illuminating properties. The number of particles can be determined in correlation to how much light should be redirected from at least one light out-coupling surface of the light guide unit. The number, size, type, and/or material of the particles may be correlated to at least part of the illumination properties of the light guide unit.

When operating the at least one light emitting element, a portion of the current that is applied to electrodes of the at least one light emitting element is converted into thermal energy rather than into light. To maintain the at least one light emitting element at an acceptable operating temperature and to achieve a sufficient or required usage lifetime and to provide a substantially constant or constant luminous flux at certain wavelength, such an illumination device may be equipped with a heat removal unit. The heat removal unit may for example comprise a heat sink in communication with the light guide unit. With this approach some of the heat generated by the light source, for example a LED, may be dissipated. However, this approach may increase the size of the illumination device to an undesired extent. It would be advantageous to reduce the size of the heat sink or even to completely remove or hide the heat sink from an illumination device, while still retaining at least some or the same heat dissipation capacity as when utilizing the heat sink.

One advantage with an illumination device comprising a light guide unit and at least one light emitting element according to the present invention, wherein at least a portion of the body of the light guide unit has an absolute thermal resistance equal to or less than 20 K/W, is that heat originating from the at least one light emitting element may be dissipated from the illumination device without requiring a relatively large additional heat sink, because the light guide unit can function as a heat sink itself. When the light guide unit acts as a heat sink, the heat sink is in a sense 'hidden'.

The light guide unit may comprise a thermally conductive material.

The light guide unit according to the present invention comprises heat transferring means in the form of a layer of a thermally conductive material that is comprised in at least a portion of an outer surface of the light guide, for transfering away heat generated by the at least one light emitting element during use. Additionally, at least a portion of the light guide unit or light guide may comprise thermally conductive material. In an embodiment, the light guide unit comprises a thermally conductive material, wherein at least a portion of the body of the light guide unit has a thermal conductivity equal to or exceeding 12.5 W/(m.K). The term "thermal conductivity", as referred herein, denotes the property of a material's ability to conduct heat.

Heat transfer across or in materials of high thermal conductivity occurs at a higher rate than across or in materials of low thermal conductivity. A material with low thermal resistance has a high thermal conductivity and vice versa, and thus, the ability of a material with a relatively low thermal resistance to transfer heat across the material is relatively large. The thermal conductivity of a material or element depends on the geometry of the material. The heat transferring means according to the present invention maybe in the form of a layer or coating of at least a portion of the outer surface of the light guide. In another example, the heat transferring means comprises at least one thermally conductive connector.

As described above, the heat transferring means may have different appearances and/or configurations. However, the function of the heat transferring means is in general the same. The heat transferring means transfers away heat which is generated by the at least one light emitting element during use. One advantage of decreasing the temperature of the illumination device is to prolong the lifetime of the at least one light emitting element. When drawing the heat away, the heat is also spread over a larger area, due to which cooling through convection or radiation increases.

The layer of a thermally conductive material that is comprised in at least a portion of an outer surface of the light guide may be laminated onto the light guide unit. The term "lamination", as referred to herein, means a process where two or more layers of material are united or coupled together. In one example, a light guide comprising an acrylic material is laminated with a layer of a thermally conductive material.

The layer of a thermally conductive material that is comprised in at least a portion of an outer surface of the light guide comprises a mesh of a plurality of wires comprising thermally conductive material. The material of the wires may for example be selected from copper, gold, silver, zinc, and/or stainless steel. The layer comprising a mesh wires can comprise at least one wire of more than one material. Normally a metal such as copper does not transmit light, but a mesh acting as a (semi-)transparent thermal conductor can transmit light. The width of the wires in the mesh can be 0.1 mm, or 0.02 mm, with a corresponding wire spacing of 4 to 40 times the wire width or diameter. The mesh structure can be made with a lithographic process, and therefore is preferably done on a separate layer that is subsequently laminated to the light guide. Another way to manufacture the mesh structure is to use silkscreen printing with a heat conductive ink.

In some examples, the illumination device comprises a light guide which is laminated with more than one layer of a thermally conductive material. For example, these layers may comprise different materials.

One or more sides of the light guide may be laminated with a layer of a thermally conductive material. For example, one or more light in-coupling surfaces can be laminated with a layer. In other examples, one or more light out-coupling surfaces can be laminated with a thermally conductive layer. In yet another example, the thermally conductive layer can be laminated inside an opening of one side of the light guide. The thermally conductive layer may be smooth or rough, but is preferably smooth, unless the roughness is needed for additional light out-coupling. The thermally conductive layer may comprise air bubbles and/or pores, but preferably does not comprise these.

The thermal conductivity of the material depends on the thickness of the thermally conductive layer. Preferably, the thermally conductive layer has a thickness that helps to remove the heat generated by the at least one light emitting element away from the light guide unit. The thickness may be defined based on its location on the light guide unit. The thermally conductive layer may be thicker in a zone from which a relatively large amount of heat needs to be transported away. The thickness of the thermally conductive layer may be equal to or exceeding 100 $\mu$m, such as equal to or exceeding 250 micrometer, such as equal to or exceeding 500 micrometer or such as equal to or exceeding 1000 micrometer.

Preferably, the thickness of the thermally conductive layer may be equal to or exceeding 1 mm. An advantage with lamination is that a relatively thick layer can be laminated onto the light guide unit.

Alternatively, the layer of a thermally conductive material that is comprised in at least a portion of an outer surface of the light guide is a thermally conductive coating. The thermally conductive material may be selected from diamond, diamond-like carbon (DLC), MgO and $Si_3N_4$ or a combination thereof. In an example, the thermally conductive material is MgO. In yet another example, the thermally conductive material is diamond and/or diamond-like carbon (DLC).

In one example, at least a part of the outer surface of a light guide unit comprising a layer of a thermally conductive material is coated with a thermally conductive coating. For example, the coating is at least partly covering said layer. In another example, a MgO. In yet another example, the thermally conductive material is diamond and/or diamond-like carbon (DLC).

In one example, at least a part of the outer surface of a light guide unit comprising a layer of a thermally conductive material is coated with a thermally conductive coating. For example, the coating is at least partly covering said layer. In another example, a light guide unit comprising a layer comprising a mesh of wires can be coated with a thermally conductive coating. It might be easier to apply a coating comprising a thermally conductive material onto a light guide unit when using a layer comprising a mesh or a laminated layer comprising a thermally conductive material underneath.

One or more sides of the light guide may be provided with a coating of a thermally conductive material. For example, one or more light in-coupling surfaces can be coated. In other examples, one or more light out-coupling surfaces can be coated with a thermally conductive layer. The surface of the light guide may be at least partially covered with a thermally conductive coating. The coating may cover at least 25 % of the surface of the light guide, such as at least 50 % of the surface of the light guide, such as at least 75 % of the surface of the light guide or such as at least 99 % of the surface of the light guide. In another example, the thermally conductive coating can be placed inside an opening of one side of the light guide. The thermally conductive coating may be smooth or rough, but is preferably smooth, unless the roughness is needed for additional light out-coupling. The thermally conductive coating may comprise air bubbles and/or pores, but preferably does not comprise these.

The thermal conductivity of the material depends on the thickness of the thermally conductive coating. The thermally conductive coating may have a thickness that helps to remove the heat generated by the at least one light emitting element away from the light guide unit. The thickness may be defined based on its location on the light guide unit. The thermally conductive coating may be thicker in a zone from which a relatively large amount of heat needs to be transported away. In an embodiment, the thickness of the thermally conductive coating is equal to or exceeding 25 micrometer. In other examples, the thickness of the coating is equal to or exceeding 100 micrometer, preferably equal to or exceeding 250 micrometer and most preferably equal to or exceeding 500 micrometer. In one example, a thermally conductive coating with a thickness of equal to or exceeding 25 micrometer comprising diamond is used.

A light guide comprising a thermally conductive material might be relatively expensive. One advantage with using a light guide comprising a transparent acrylic material which is laminated with a thermally conductive material or coated with a thermally conductive material may be a reduction of the cost of the illumination device. Usually, a (transparent) thermally conductive material is more expensive than a (transparent) acrylic material.

Another advantage with a light guide laminated with a thermally conductive material or being coated with a thermally conductive material instead of using a light guide comprising a thermally conductive material is the feasibility to manufacture a light guide with embedded light scattering and/or reflecting particles. It may be more difficult and/or more expensive to manufacture a light guide comprising a thermally conductive material where the light scattering and/or reflecting particles are embedded within the thermally conductive material. However, the thermally conductive layer or thermally conductive coating may comprise embedded light scattering and/or reflecting particles.

The illumination device according to the present invention comprises a thermally conductive connector for coupling the heat transferring means and the light-emitting element with each other. The at least one thermally conductive connector may comprise a material of high thermal conductivity, such as a metal. Examples of such a metal are copper and aluminum. The thermal conductive connector should be in thermal communication with the structure from which it absorbs heat. In some examples, the at least one thermally conductive connector is used to transport heat generated by the at least one light emitting element away from the at least one light emitting element. In other examples, the thermal conductive connector is used to transport away heat from the light guide unit and the at least one light emitting element, for example towards an additional heat sink. The size of the thermally conductive connector may correspond to the size of the light guide. In another example, the size of the thermally conductive connector may correspond to the size of the at least one light emitting element. In yet other examples, the thermally conductive connector is rather small, smaller than the light guide and/or the at least one light emitting element, due to good ability to transfer heat.

To achieve a thermal connection between the thermal conductive connector and the light guide unit and the at least one light emitting element, respectively, an adhesive, for example a thermally conductive adhesive, may be used. By using an adhesive, the transfer of heat from the light emitting element to the thermal conductive connector may be increased.

In an embodiment, the at least one light emitting element comprises a light emitting diode (LED). A LED is a semiconductor light source. When a light-emitting diode is forward-biased (switched on), electrons are able to recombine with electron holes within the device, releasing energy in the form of photons. This effect is called electroluminescence and the color of the light (corresponding to the energy of the photon) is determined by the energy gap of the semiconductor. LEDs are often small in area (less than 1 mm$^2$), and integrated optical components may be used to shape the radiation pattern of a LED. LEDs present many advantages over incandescent light sources including lower energy consumption, longer lifetime, improved robustness, smaller size, and faster switching. The size of the LED or LEDs may at least partly determine the size of the illumination device.

More than one light emitting element may be preferable to use, in order to increase the amount of light that is coupled into the light guide unit. An increased amount of in-coupled light may enable an increased brightness and possibly an increased uniformity in the illumination from the light guide unit.

By using a light guide unit comprising a thermally conductive material and/or heat transferring means according to the present invention, the lifetime of the at least one light emitting element may be increased by providing heat transportation functionality and thereby decreasing the temperature of the at least one light emitting element during use.

LEDs can be used in applications as diverse as aviation lighting, automotive lighting, advertising, general lighting, and traffic signals.

In an embodiment, the LED light source is an RGB LED, or multicolor white LED, light source. RGB LEDs may allow the color of the light output from or emitted by the illumination device to vary.

An illumination device according to the present invention may be used for illuminating shelves, interior panels, thin profile signs and poster panels, etc. In an embodiment, a luminaire comprising an illumination device according to the present invention may be used. A luminaire may be used for general lighting of a space, preferably a home. A luminaire may be used for consumer lighting. When using an illumination device according to the present invention as a luminaire, more power may be needed. The extra power, for example in the form of extra light, may cause an increase of heat generated by the at least one light emitting element. One advantage to use a luminaire comprising an illumination device according to the present invention is its ability to transfer away heat from the luminaire.

BRIEF DESCRIPTION OF THE DRAWINGS

Exemplifying embodiments of the invention will be described below with reference to the accompanying drawings, wherein:

Fig.1 schematically depicts an illumination device according to an embodiment of the present invention.

Fig. 2 schematically depicts an illumination device wherein a light guide is completely (Fig. 3a) or partially (Fig. 3b) covered with a thermally conductive coating.

Figs. 4a to 4d schematically depict illumination devices comprising a thermally conductive connector. In Fig. 4b the light guide is partially covered with a thermally conductive coating. In Fig. 4c, a thermally conductive coating is placed inside an opening of a side of the light guide. In Fig. 4d, one light in-coupling surface of the light guide is covered with a thermally conductive coating.

As illustrated in the figures, the sizes of layers and regions are exaggerated for illustrative purposes and, thus, are provided to illustrate the general structures of embodiments of the present invention. Like reference numerals refer to like elements throughout.

DETAILED DESCRIPTION OF THE EMBODIMENTS

The present invention will now be described more fully hereinafter with reference to the accompanying drawings, in which exemplifying embodiments of the present invention are shown. The present invention may, however, be embodied in many different forms and should not be construed as limited to the embodiments set forth herein; rather, these embodiments are provided by way of example so that this disclosure will convey the scope of the invention to those skilled in the art. Furthermore, like numbers refer to the same or similar elements or components throughout.

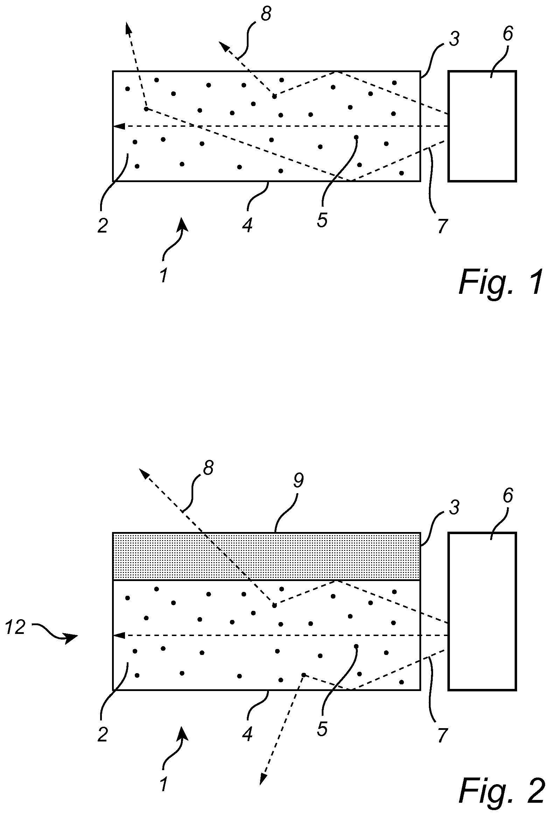

Fig. 1 schematically depicts an illumination device 1, arranged to generate output light. The illumination device 1 comprises at least one light emitting element 6 and a light guide unit 2. The at least one light emitting element 6 is arranged to couple input light 7 into the light guide unit 2. The light guide unit 2 is arranged to receive input light 7 and to out-couple it as out-put light 8.

The at least one light emitting element 6 may be of any kind of element that is able to generate and emit light. For example, the at least one light emitting element 6 may comprises a light emitting diode, LED. An RGB LED is advantageous to use for enabling dynamic color light output 8 from the illumination device 1. The illumination device 1 of the present invention may comprise two or more light emitting elements 6. More than one light emitting element 6 may be preferable to use in order to increase the amount of light that is coupled into the light guide unit 2. An increased amount of in-coupled light 7 may enable an increased brightness and possibly an increased uniformity in the illumination from the light guide unit 2. The at least one light emitting element 6 according to the present invention may be of the same type or different types of light emitting elements.

In Fig. 1, the light guide unit 2 comprises a waveguide which is arranged to receive input light 7 through or via a light in-coupling surface 3 and to out-couple the light 8 through or via a light out-coupling surface 4. In a preferred embodiment, as shown in Fig. 1, the light guide unit 2 is substantially plate shaped, having edge surfaces along its edges, as well as a top surface and a bottom surface. Preferably, the top and bottom surfaces are parallel. A light in-coupling surface 3 is arranged on at least one of the edge surfaces and is preferably perpendicular to the top and bottom surfaces. A light out-coupling surface 4 is arranged on the top and/or bottom surface. The light guide unit 2 may alternatively be arranged in various other ways. For example, the light guide unit 2 may have a curved configuration, having curved top and bottom surfaces, or have a rod-like shape. The light guide unit 2 may be in the form of a fiber. The light guide unit 2 may be triangular, circular or have any other regular or irregular shape.

The light guide unit 2 is arranged to enable propagation of light coupled into the light guide unit 2 by means of total internal reflection (TIR). The light guide unit 2 comprises a material through which light can propagate. The material preferably is a transparent material. Examples of such material include transparent acrylic materials such as poly(methylmethacrylate) (PMMA), polycarbonate, glass and/or silicon rubber. In yet other embodiments, the light guide unit 2 comprises a material having a relatively high thermal conductivity. Examples of such material having a high relatively thermal conductivity are diamond, diamond-like carbon (DLC), MgO and/or $Si_3N_4$.

Light scattering and/or reflecting particles 5 are embedded in the wave guide. These particles may comprise the same or different material compared to the material of the waveguide. The particles may have a size in the range of 1 to 10 micrometer.

The light scattering and/or reflecting particles 5 enable out-coupling of the light as output light 8. The light scattering and/or reflecting particles 5 redirect light beams that impinge upon them, and may redirect at least some of the light beams towards the light out-coupling surface 4, at an angle of incidence that is smaller than the critical angle for TIR, thus enabling the light beam to be out-coupled from the light out-coupling surface 4 of the light guide unit 2. The number of particles 5 can be determined in correlation to how much light should be redirected from at least one light out-coupling surface 4 of the light guide unit 2. The number, size, type, and/or material of the particles 5 may be correlated to at least part of the illumination properties of the light guide unit.

Fig. 2 shows a schematic embodiment of an illumination device 1 according to the present invention, which comprises a light emitting element 6 and a light guide unit 2 comprising a wave guide 12 with heat transferring means in the form of a layer 9 which comprises a thermally conductive material. The wave guide 12 comprises light scattering and/or reflecting particles 5 and the light guide unit 2 is arranged to receive input light 7 from the light emitting element 6 through or via a light in-coupling surface 3. It is to be understood that additional light emitting elements 6 other than that shown in Fig. 2 can be used in an illumination device according to embodiments of the present invention.

The wave guide 12 comprises a transparent material, for example a transparent acrylic material, such as poly(methylmethacrylate) (PMMA).

When using a high power light source as a light emitting element 6, such as a LED light source, the light emitting element 6 may become relatively warm. Cooling of the light emitting element may be required and can be performed by conducting away the heat from the illumination device 1. For example, a thermally conductive material 9 can be laminated onto the top and/or bottom surface of the wave guide 12. In other examples, at least one light in-coupling surface 3 of the wave guide 12 is laminated with a layer 9 comprising a thermally conductive material. In yet other examples, at least one light out-coupling surface of the wave guide 12 is laminated with a layer 9. Examples of a thermally conductive material include diamond, diamond-like carbon (DLC), MgO and $Si_3N_4$.

The light guide unit 2 is arranged to have an absolute thermal resistance equal to or less than 20 K/W, which might be the highest thermal resistance for which the heat transfer will have a significant effect for acceptable temperatures when applied in an illumination device, for example a luminaire. The thermal resistance, R, of a sheet, such as a wave guide, with a single type of material can be calculated by using:

$$q = k \cdot A \cdot dT/s$$

where:

q is the heat transferred per unit time (provided in W or Btu/hr);
A is the heat transfer area (provided in $m^2$ or $ft^2$);
k is the thermal conductivity of the material (provided in W/(m·K), or W/(m·°C), or Btu/(hr-F-ft));
dT is the temperature difference across the material (provided in K, or °C, or °F); and
s is the heat transfer length (provided in m or ft), which is half of the length of the light guide unit in case light is coupled in from two sides.
"ft" denotes the unit of length "foot".

The thermal resistance, R, can be calculated as follows:

$$R = 1/k \cdot s/A$$

Examples of materials suitable to be used as a thermally conductive layer are materials with a k value in the range of between 10 and 1000 W/(m·K), such as for example diamond, diamond-like carbon (DLC), MgO and $Si_3N_4$.

The heat transferring means, for example in the form of a layer 9 comprising a thermally conductive material, decreases the absolute thermal resistance of the light guide unit 2 to equal to or less than 20 K/W. The thermally conductive layer 9 onto the wave guide 12 enables a reduction of the temperature of the illumination device 1 when the light emitting element 6 is providing light 7 into the light guide unit 2. A transparent thermally conductive material is usually more expensive than a transparent acrylic material. Thus, by using a layer 9 of a thermally conductive material onto a wave guide 12, which comprises a transparent material, such as an acrylic material, instead of a wave guide 12 consisting of a transparent thermally conductive material, a reduction of the cost may be obtained. Furthermore, it may be difficult to manufacture a transparent thermally conductive material with embedded light scattering and/or reflecting particles 5.

The thermal conductivity of the material depends on the thickness of the thermally conductive layer 9. The thickness of the layer can be calculated by using:

$$d = (1/20) \cdot (s/k) \cdot (1/l)$$

where:

d is the thickness of the layer;
s is the heat transfer length (provided in m or ft), which is half of the length of the light guide in case light is coupled in from two sides;
k is the thermal conductivity of the material (provided in W/(m·K), or W/(m·°C), Btu/(hr-F-ft)); and
l is the width of the layer on the in-coupling side.

In one particular example, the size of a light guide is 0.5x0.5x0.002 $m^3$. The thickness of the layer can be calculated by using the equation above: d = $(1120) \cdot (s/k) \cdot (111)$= 1/20·(0.5/2)/k)·(1/0.5)=0.025/k. For example, a layer comprising a material such as diamond (with a k value of about 1000 W/(m·K)) would only require a thickness of about 25 micrometer to provide a sufficient heat transfer ability.

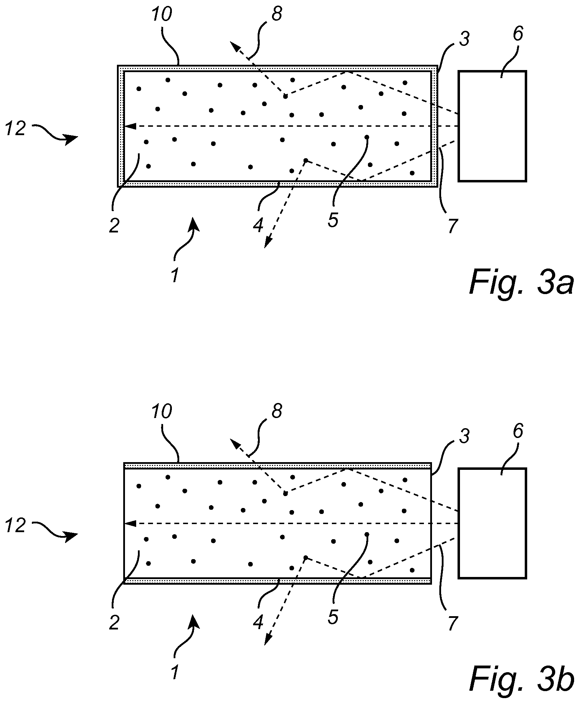

Figs. 3a and 3b shows schematic embodiments of illumination devices 1 according to the present invention, which comprise a light emitting element 6 and a light guide unit 2 with a wave guide 12 covered (Fig. 3a) or partially covered (Fig. 3b) with a thermally conductive coating 10. The light guide unit 2 comprises a wave guide 12 with embedded light scattering and/or reflecting particles 5 and the light guide unit 2 is arranged to receive input light 7 from the light emitting element 6 through a light in-coupling surface 3. It may be understood that additional light emitting elements 6 can be used in an illumination device according to embodiments of the present invention.

The wave guide 12 comprises a transparent material, for example a transparent acrylic material such as poly(methylmethacrylate) (PMMA).

In order to cool down the illumination device 1, the light guide 2 may be arranged with a coating 10 comprising a thermally conductive material. Examples of a thermally conductive material to use as a coating of the light guide include diamond, diamond-like carbon (DLC), MgO and $Si_3N_4$. It may be preferable to use diamond or diamond-like carbon (DLC). The coating functions as heat transferring means. The thermally conductive material of the coating 10 decreases the absolute thermal resistance of the light guide unit 2 to equal to or less than 20 K/W. The thermally conductive coating 10 on at least a portion of the outer surface of the wave guide 12 enables a reduction of the temperature of the illumination device 1 when the light emitting element 6 is providing light 7 into the light guide unit 2.

The coating 10 may be provided on at least a portion of the outer surface of the wave guide. For example, a light in-coupling surface 3 may be coated. In another example, a light out-coupling surface 4 may be coated.

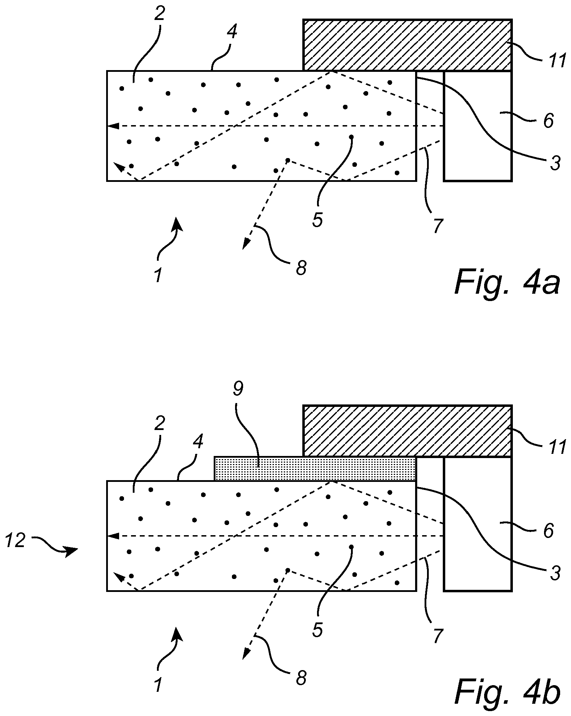

Figs. 4a to 4d show schematic embodiments of illumination devices 1 according to the present invention, which comprises a light guide unit 2 and a light emitting element 6. It may be understood that additional light emitting elements 6 can be used in an illumination device according to embodiments of the present invention. The wave guide 12 comprises a transparent material, for example a transparent acrylic material such as poly(methylmethacrylate) (PMMA). The wave guide 12 comprises light scattering and/or reflecting particles 5 and the light guide unit 2 is arranged to receive input light 7 from the light emitting element 6 through or via a light in-coupling surface 3. In Figs. 4a to 4d, a thermally conductive connector 11 is coupled with the light guide unit 2 and the light emitting element 6. It is to be understood that additional thermally conductive connectors 11 can be used in an illumination device according to embodiments of the present invention. The thermally conductive connector 10 functions as heat transferring means and can lead heat away from both the light guide unit 2 and the at least one light emitting element 6. The thermally conductive connector 11 comprises a material with a relatively high thermal conductivity, for example a metal, such as aluminum. An adhesive may be used in order to make the thermal connection even better. For example, a thermally conductive adhesive may be used.

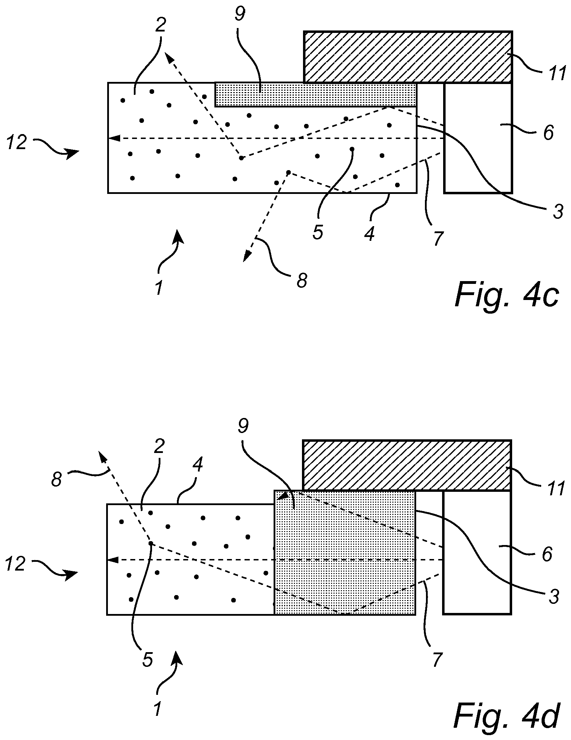

In Fig. 4a, the thermally conductive connector 11 is directly arranged onto the surface of the wave guide 12. In other embodiments, the wave guide 12 is at least partly covered with a thermally conductive layer 9 and thus, the thermally conductive connector 11 is arranged to couple to the thermally conductive layer 9, as can be seen in Figs. 4b-4d. In Fig. 4b, the thermally conductive layer 9 partly covers a surface of the wave guide 12. For example, the thermally conductive layer 9 partly covers a light out-coupling surface 4, such as the top surface of the wave guide 12. The heat of the light guide 2 is transferred through the thermally conductive layer 9 to the thermally conductive connector 11. In Fig. 4c, the thermally conductive layer 9 is arranged in an opening of the wave guide surface. Also in this embodiment, heat is transferred through the thermally conductive layer 9 of the light guide unit 2 to the thermally conductive connector 11. The thermally conductive layer 9 can be laminated onto one side of the wave guide 12, as can be seen in Fig. 4d. For example, the thermally conductive layer 9 can be laminated onto a light in-coupling surface 3 of the wave guide 2. In all of Figs. 4a-4d, heat is transferred from the at least one light emitting element to the thermally conductive connector.

While the present invention has been illustrated and described in detail in the appended drawings and the foregoing description, such illustration and description are to be considered illustrative or exemplifying and not restrictive; the present invention is not limited to the disclosed embodiments. Other variations to the disclosed embodiments can be understood and effected by those skilled in the art in practicing the claimed invention, from a study of the drawings, the disclosure, and the appended claims. The mere fact that certain measures are recited in mutually different dependent claims does not indicate that a combination of these measures cannot be used to advantage. Any reference signs in the claims should not be construed as limiting the scope.

**Claims**

1.  An illumination device (1) comprising:

    - a light guide unit (2) comprising embedded light scattering and/or light reflecting particles (5) and a light in-coupling surface (3) adapted to couple light into the light guide unit (2); and
    - a light emitting element (6) arranged to emit light into the light guide unit (2) via the light in-coupling surface (3);

    wherein at least a portion of an outer surface of the light guide unit (2) comprises a layer (9) having a mesh of a plurality of wires comprising a thermally conductive material so that the portion of the light guide unit (2) has an absolute thermal resistance equal to or less than 20 K/W, and

wherein the layer (9) and the light-emitting element (6) are coupled with each other via a thermally conductive connector (11).

2. The illumination device according to claim 1, wherein the portion of the light guide unit has an absolute thermal resistance equal to or less than 17 K/W.

3. The illumination device according to claim 1 or 2, wherein the light guide unit comprises a material selected the group consisting of poly(methylmethacrylate), polycarbonate, glass, and silicon rubber.

4. The illumination device according to claim 1, wherein the thermally conductive material is selected from the group consisting of diamond, diamond-like carbon, MgO, $Si_3N_4$, and any combination thereof.

5. The illumination device according to claim 1, wherein the material of the plurality of wires is selected from the group consisting of copper, gold, silver, zinc, and stainless steel.

6. The illumination device according to any one of claims 1 to 5, wherein the light emitting element comprises a light emitting diode.

7. A luminaire comprising an illumination device (1) according to any one of the previous claims.

**Patentansprüche**

1. Beleuchtungsvorrichtung (1), umfassend:

    - eine Lichtleitereinheit (2), die eingebettete lichtstreuende und/oder lichtreflektierende Teilchen (5) und eine Licht-Einkoppelfläche (3) umfasst, die dazu ausgebildet ist, Licht in die Lichtleitereinheit (2) einzukoppeln; und
    - ein lichtemittierendes Element (6), das dazu ausgebildet ist, Licht über die Licht-Einkoppelfläche (3) in die Lichtleitereinheit (2) hinein zu emittieren;

    wobei mindestens ein Abschnitt einer Außenfläche der Lichtleitereinheit (2) eine Schicht (9) umfasst, die ein Geflecht aus einer Vielzahl von Drähten besitzt, die ein thermisch leitfähiges Material umfassen, so dass der Abschnitt der Lichtleitereinheit (2) einen absoluten Wärmewiderstand von gleich oder kleiner als 20 K/W besitzt, und
    wobei die Schicht (9) und das lichtemittierende Element (6) über einen thermisch leitfähigen Verbinder (11) miteinander gekoppelt sind.

2. Beleuchtungsvorrichtung nach Anspruch 1, wobei der Abschnitt der Lichtleitereinheit einen absoluten Wärmewiderstand von gleich oder kleiner als 17 K/W besitzt.

3. Beleuchtungsvorrichtung nach Anspruch 1 oder 2, wobei die Lichtleitereinheit ein Material umfasst, das aus der Gruppe bestehend aus Poly(methylmethacrylat), Polycarbonat, Glas und Silikonkautschuk ausgewählt ist.

4. Beleuchtungsvorrichtung nach Anspruch 1, wobei das thermisch leitfähige Material ausgewählt ist aus der Gruppe bestehend aus Diamant, diamantartigem Kohlenstoff, MgO, $Si_3N_4$, und jeder Kombination daraus.

5. Beleuchtungsvorrichtung nach Anspruch 1, wobei das Material der Vielzahl von Drähten ausgewählt ist aus der Gruppe bestehend aus Kupfer, Gold, Silber, Zink und Edelstahl.

6. Beleuchtungsvorrichtung nach einem der Ansprüche 1 bis 5, wobei das lichtemittierende Element eine lichtemittierende Diode umfasst.

7. Leuchte, die eine Beleuchtungsvorrichtung (1) nach einem der vorhergehenden Ansprüche umfasst.

**Revendications**

1. Dispositif d'éclairage (1), comprenant :

    - une unité à guide de lumière (2) comprenant des particules incorporées à diffusion de lumière et/ou à réflexion de lumière (5) et une surface de couplage d'entrée de lumière (3) adaptée pour coupler de la lumière dans l'unité à guide de lumière (2) ; et
    - un élément émetteur de lumière (6) agencé pour émettre de la lumière dans l'unité à guide de lumière (2) par l'intermédiaire de la surface de couplage d'entrée de lumière (3) ;

    dans lequel au moins une portion d'une surface extérieure de l'unité à guide de lumière (2) comprend une couche (9) possédant une maille d'une pluralité de fils métalliques comprenant un matériau thermiquement conducteur pour que la portion de l'unité à guide de lumière (2) possède une résistance thermique absolue égale ou inférieure à 20 K/W, et dans lequel la couche (9) et l'élément émetteur de lumière (6) sont couplés l'un avec l'autre par l'intermédiaire d'un connecteur thermiquement conducteur (11).

2. Dispositif d'éclairage selon la revendication 1, dans lequel la portion de l'unité à guide de lumière possède une résistance thermique absolue égale ou inférieure à 17 K/W.

3. Dispositif d'éclairage selon la revendication 1 ou 2, dans lequel l'unité à guide de lumière comprend un matériau sélectionné parmi le groupe constitué de poly(méthylméthacrylate), de polycarbonate, de verre, et de caoutchouc au silicium.

4. Dispositif d'éclairage selon la revendication 1, dans lequel le matériau thermiquement conducteur est sélectionné parmi le groupe constitué de diamant, de carbone sous forme de diamant, de MgO, de $Si_3N_4$, et d'une quelconque association de ceux-ci.

5. Dispositif d'éclairage selon la revendication 1, dans lequel le matériau de la pluralité de fils métalliques est sélectionné parmi le groupe constitué de cuivre, d'or, d'argent, de zinc, et d'acier inoxydable.

6. Dispositif d'éclairage selon l'une quelconque des revendications 1 à 5, dans lequel l'élément émetteur de lumière comprend une diode électroluminescente.

7. Luminaire comprenant un dispositif d'éclairage (1) selon l'une quelconque des revendications précédentes.

*Fig. 1*

*Fig. 2*

Fig. 3a

Fig. 3b

Fig. 4a

Fig. 4b

Fig. 4c

Fig. 4d

**EP 2 890 929 B1**